# DEMANDE DE BREVET EUROPEEN

(11) **EP 0 854 623 A1**
(43) Date de publication de la demande: **22.07.1998**
(21) Numéro de dépôt: 98410002.4
(22) Date de dépôt: 16.01.1998
(51) Int. Cl.: H04M 1/66

(54) **Dispositif de restriction d'accès pour poste téléphonique**

(30) Priorité: 17.01.1997 FR 9700692
(71) Demandeur: Casado, Laurent, 34170 Castelnau le Lez (FR)
(72) Inventeur: Casado, Laurent, 34170 Castelnau le Lez (FR)
(74) Mandataire: de Beaumont, Michel

(57) **Abrégé**

L'invention concerne une prise téléphonique (20') comprenant deux bornes (20-1, 20-2) destinées à être reliées à deux fils respectifs d'une ligne téléphonique (LT). Elle comprend un dispositif de restriction d'accès (8) destiné à empêcher une communication téléphonique lors de la composition d'un numéro commençant par une séquence interdite de chiffres, ledit dispositif de restriction étant connecté aux deux bornes et comportant un commutateur (K) connecté entre une première (20-2) des deux bornes et une borne supplémentaire (20-3), les deux fils de la ligne téléphonique étant connectés respectivement à la deuxième des deux bornes (20-1) et à la borne supplémentaire.

## Description

La présente invention concerne un dispositif de restriction d'accès destiné à empêcher une communication téléphonique lorsqu'un numéro interdit est composé sur un poste d'abonné.

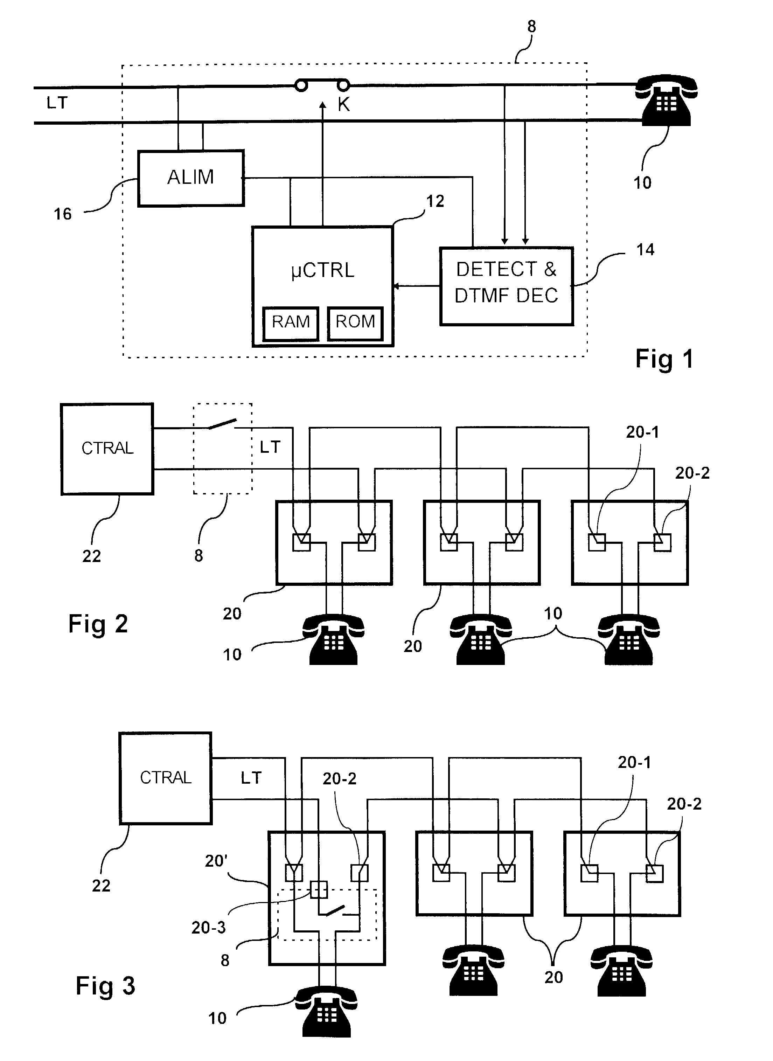

La figure 1 représente schématiquement un dispositif de restriction 8 classique, du type décrit dans la demande de brevet PCT WO 95/12266. Le dispositif 8 comprend un commutateur K connecté pour pouvoir interrompre une ligne téléphonique LT qui est reliée à un poste d'abonné 10. Le commutateur K est commandé par un microcontrôleur 12 qui reçoit des signaux d'un ensemble de circuits 14 permettant notamment de détecter un décroché et de décoder les signaux de fréquence vocale (DTMF) véhiculés sur la ligne LT. L'ensemble 14 a été représenté relié à la ligne LT entre le commutateur K et le poste 10, mais il pourrait également être relié en amont du commutateur K, car il n'est pas destiné à fonctionner lorsque le commutateur K est ouvert.

Le microcontrôleur 12 est associé à une mémoire ROM contenant le programme à exécuter par le microcontrôleur, et à une mémoire RAM servant à stocker des variables. La mémoire RAM stocke notamment des séquences de chiffres interdites et autorisées, programmables par l'utilisateur.

Le microcontrôleur 12 et l'ensemble 14 sont alimentés par une source 16 qui prélève la puissance disponible sur la ligne téléphonique LT en amont du commutateur K.

La figure 2 illustre une application principale du dispositif de restriction d'accès décrit dans la demande de brevet PCT susmentionnée. Une installation téléphonique simple, notamment au domicile d'un particulier, peut comprendre plusieurs postes téléphoniques 10 reliés à des prises respectives 20. Les postes téléphoniques 10, donc les prises 20, sont connectés en parallèle sur les deux fils de la ligne téléphonique LT.

Le dispositif de restriction d'accès 8 est connecté, comme cela est représenté, sur les deux fils qui relient la première prise 20 de l'installation au central 22. De cette manière, le dispositif 8 peut détecter une séquence interdite composée à partir de n'importe lequel des postes téléphoniques 10 et couper la ligne alimentant tous les postes téléphoniques.

Un inconvénient de cette installation est que les fils sur lesquels le dispositif de restriction 8 doit être monté ne sont pas toujours accessibles ou faciles à trouver, ce qui nécessite habituellement l'intervention d'un professionnel. Il en résulte que le coût de l'installation est le plus souvent trop élevé pour qu'un particulier soit tenté de l'adopter.

Bien entendu, il existe d'autres endroits où on peut placer un dispositif de restriction d'accès, par exemple entre un poste téléphonique et sa prise. Mais alors, il suffit de brancher un autre poste téléphonique à la prise pour qu'il n'y ait plus de restriction d'accès.

Un objet de la présente invention est de prévoir un dispositif de restriction d'accès téléphonique qui puisse facilement être installé par un particulier et qui assure néanmoins la protection de l'ensemble d'une installation téléphonique.

Cet objet est atteint grâce à une prise téléphonique comprenant deux bornes destinées à être reliées à deux fils respectifs d'une ligne téléphonique, caractérisée en ce qu'elle comprend un dispositif de restriction d'accès destiné à empêcher une communication téléphonique lors de la composition d'un numéro commençant par une séquence interdite de chiffres, ledit dispositif de restriction étant connecté aux deux bornes et comportant un commutateur connecté entre une première des deux bornes et une borne supplémentaire, les deux fils de la ligne téléphonique étant connectés respectivement à la deuxième des deux bornes et à la borne supplémentaire.

Selon un mode de réalisation de la présente invention, le dispositif de restriction d'accès comprend une mémoire librement programmable par un utilisateur pour stocker des séquences interdites de chiffres ; et des moyens d'analyse reliés à la ligne pour acquérir les chiffres composés sur le poste, les comparer aux séquences interdites stockées dans la mémoire et, en cas de coïncidence, commander l'ouverture du commutateur pour simuler un raccroché.

Selon un mode de réalisation de la présente invention, le dispositif de restriction d'accès devient temporairement inopérant après la composition sur le poste d'un code confidentiel, ce code confidentiel étant différencié d'un numéro téléphonique par la composition avec le code d'une première combinaison de symboles spéciaux.

Selon un mode de réalisation de la présente invention, la composition du code confidentiel provoque une ouverture suivie d'une fermeture du commutateur, le dispositif redevenant opérant lors d'un raccroché ultérieur.

Selon un mode de réalisation de la présente invention, une séquence est programmable dans la mémoire par l'intermédiaire du clavier du poste après composition du code confidentiel avec une deuxième combinaison de symboles spéciaux.

Selon un mode de réalisation de la présente invention, l'emplacement d'une séquence dans la mémoire est identifié par la composition d'un numéro d'emplacement et d'une combinaison spécifique de symboles spéciaux.

Selon un mode de réalisation de la présente invention, la mémoire stocke en outre des séquences autorisées de chiffres, la correspondance d'une séquence avec un numéro interdit ou un numéro autorisé étant indiquée par une information supplémentaire associée à chaque séquence, les moyens d'analyse étant prévus pour trouver, parmi les séquences stockées, la plus longue coïncidant avec le numéro composé, et pour commander ou non l'ouverture du commutateur en fonction de l'information supplémentaire de la séquence trouvée.

Selon un mode de réalisation de la présente invention, ladite information supplémentaire associée à une séquence est un bit d'autorisation stocké avec la séquence, ce bit étant fixé, lors d'une programmation, par la composition ou non d'un symbole spécial après la composition de la séquence.

Selon un mode de réalisation de la présente invention, la mémoire comprend une première zone prévue pour stocker des séquences interdites et une deuxième zone prévue pour stocker des séquences autorisées, ladite information supplémentaire associée à une séquence étant fournie par la zone dans laquelle est stockée la séquence.

Selon un mode de réalisation de la présente invention, la deuxième zone est prévue pour stocker en outre des séquences interdites, ladite information supplémentaire associée à une séquence stockée dans la deuxième zone étant fournie par un bit d'autorisation stocké avec la séquence.

Selon un mode de réalisation de la présente invention, les longueurs des séquences sont stockées avec les séquences.

Selon un mode de réalisation de la présente invention, la prise comprend un capot fixé par des vis à empreinte non normalisée.

Selon un mode de réalisation de la présente invention, le dispositif de restriction comporte un circuit de numérotation pour composer un numéro spécifique puis transmettre le contenu de la mémoire par fréquence vocale.

Selon un mode de réalisation de la présente invention, le dispositif de restriction comporte un circuit de numérotation, le microprocesseur étant programmé pour provoquer la numérotation d'un numéro mémorisé lorsque aucun numéro n'est composé pendant un intervalle de temps prédéterminé après un décroché.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1, précédemment décrite, représente schématiquement un dispositif de restriction d'accès classique ;
la figure 2, précédemment décrite, représente un montage classique d'un dispositif de restriction d'accès dans une installation téléphonique simple ;
la figure 3 représente un montage d'une prise téléphonique selon l'invention, munie d'un dispositif de restriction d'accès, dans une installation téléphonique classique du type de la figure 2 ;
la figure 4 représente une vue en perspective crevée d'un mode de réalisation de prise téléphonique selon l'invention, munie d'un dispositif de restriction d'accès ;
la figure 5 représente un organigramme général du fonctionnement d'un dispositif de restriction d'accès ; et
la figure 6 représente un exemple d'organigramme de gestion d'une liste de numéros interdits et autorisés selon la présente invention.

La présente invention est basée sur l'analyse de la façon particulière dont les prises d'une installation simple sont connectées les unes aux autres.

Comme le représente la figure 2, une prise téléphonique classique 20 comprend deux bornes 20-1 et 20-2 reliées à des contacts de la prise destinés à coopérer avec une fiche du poste téléphonique 10 correspondant. Par ailleurs, les bornes 20-1 et 20-2 d'une prise sont reliées par deux fils aux bornes 20-1 et 20-2 de la prise précédente. Les deux fils de la ligne téléphonique LT sont reliés aux deux bornes 20-1 et 20-2 de la première prise 20.

Selon la présente invention, on prévoit de disposer un dispositif de restriction d'accès 8 dans une prise téléphonique classique, éventuellement modifiée pour pouvoir recevoir le dispositif de restriction.

La figure 3 représente une prise 20' selon l'invention montée dans une installation téléphonique classique. De préférence, la prise 20' selon l'invention est la première. Cette prise 20' comporte, comme une prise classique, deux bornes 20-1 et 20-2 de connexion à un poste téléphonique 10 correspondant. Les bornes 20-1 et 20-2 de la prise 20' sont connectées par deux fils de manière classique aux bornes 20-1 et 20-2 de la prise 20 suivante. Par contre, seule la borne 20-1 de la prise 20' est connectée à un fil de la ligne téléphonique LT. Le fil restant de la ligne téléphonique LT est connecté à une borne 20-3 faisant partie du dispositif de restriction 8. Le dispositif de restriction 8 est connecté aux bornes 20-1, 20-2 et 20-3 de manière à constituer le montage de la figure 1, le commutateur K étant connecté entre les bornes 20-2 et 20-3. Le dispositif de restriction d'accès 8 remplit alors exactement la même fonction que celui de la figure 2, c'est-à-dire qu'il déconnecte tous les postes téléphoniques 10 du central 22 dès que l'on numérote une séquence interdite sur l'un quelconque des postes.

Un dispositif de restriction d'accès inclus, selon l'invention, dans une prise téléphonique 20' est particulièrement facile à installer. En effet, il suffit de remplacer la première prise 20 classique par une prise 20' selon l'invention et de reconnecter les fils à cette prise comme ils étaient connectés dans la prise classique, à l'exception de l'un des fils provenant du central 22, qui est connecté à la borne 20-3 du dispositif de restriction 8.

Un utilisateur peu expérimenté peut se tromper en intervertissant les fils qui sont connectés aux bornes 20-2 et 20-3. Dans ce cas, lorsqu'une séquence interdite est composée, le dispositif 8 déconnecte tous les postes 10 à l'exception de celui connecté à la première prise 22'. Ce dysfonctionnement peut facilement être détecté par l'utilisateur, qui de ce fait intervertira les fils connectés aux bornes 20-2 et 20-3 pour obtenir le bon fonctionnement. Cette connexion peut, au contraire, être volontaire si le poste relié à la prise 22' se trouve dans un local inaccessible à des utilisateurs non autorisés.

Bien entendu, une prise 20' selon l'invention peut être utilisée dans une installation à un seul poste téléphonique. La borne 20-2 n'est alors pas utilisée.

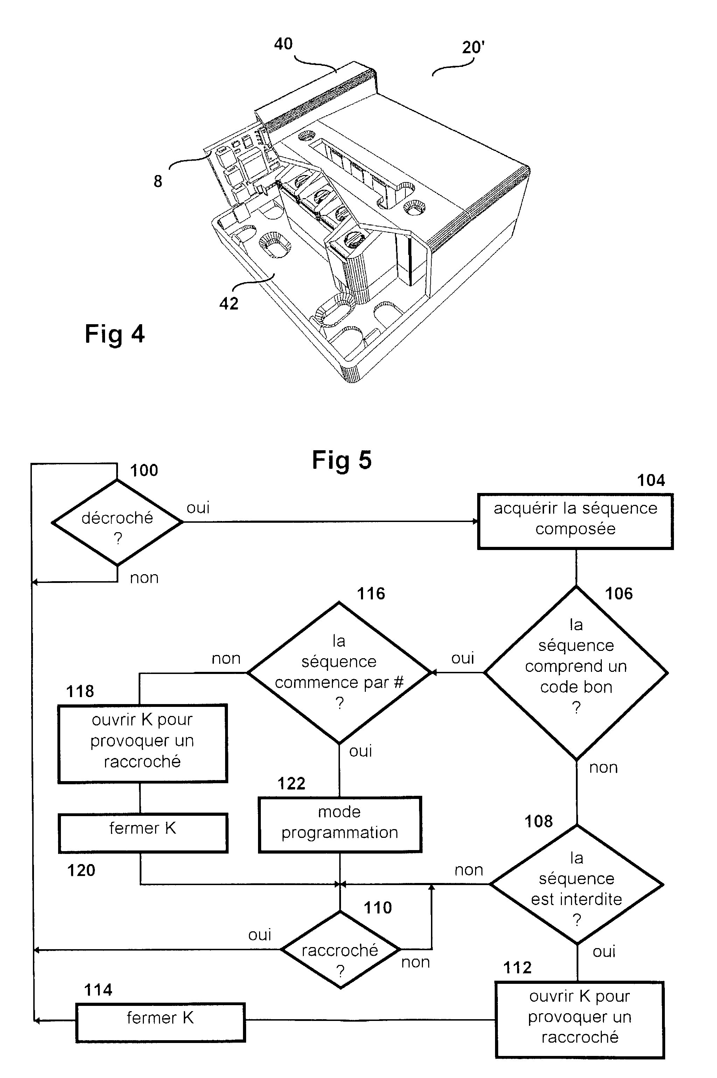

La figure 4 représente une vue en perspective crevée d'un mode de réalisation de prise 20' selon l'invention. Il s'agit ici, à titre d'exemple, d'une prise "T" utilisée en France. Le dispositif de restriction 8 est sous forme d'un circuit imprimé logé contre l'une des faces du capot 40 de la prise.

Le capot 40 est normalement fixé sur un socle 42 au moyen de deux vis. Une personne qui découvrirait la fonction de la prise selon l'invention pourrait facilement démonter le capot 40 et rétablir le fonctionnement sans restriction de la prise. Pour limiter un tel risque, les vis destinées à fixer le capot 40 sur le socle 42 sont de préférence munies d'une empreinte non normalisée, par exemple triangulaire, de sorte que seul le possesseur du tournevis correspondant puisse démonter le capot.

En résumé, le fonctionnement d'un dispositif de restriction 8 du type de la figure 1 et selon l'invention est le suivant. Le microcontrôleur 12 est programmé pour régulièrement vérifier la sortie du détecteur de décroché 14. Lorsqu'un décroché est détecté, le microcontrôleur acquiert tout chiffre ou symbole composé sur le clavier du poste 10 par l'intermédiaire du décodeur DTMF 14. Si le numéro ainsi acquis par le microcontrôleur correspond à une séquence interdite stockée dans la mémoire RAM, le microcontrôleur commande l'ouverture du commutateur K pendant un temps suffisamment long pour être perçu comme un raccroché au niveau du central téléphonique.

On peut envisager deux possibilités de commande du commutateur K. Une première possibilité est d'ouvrir immédiatement le commutateur K lors de la détection d'un numéro interdit. Une deuxième possibilité est d'ouvrir l'interrupteur K seulement après un intervalle de temps prédéterminé, ce qui permet, au lieu d'interdire la communication, de limiter la durée de cette communication. Ainsi, on pourra également stocker dans la mémoire RAM, pour chaque séquence interdite, une durée maximale de communication programmable. Bien entendu, le décomptage d'une telle durée commence de préférence à l'instant du décrochement du poste appelé. Des circuits classiques à inclure dans l'ensemble 14 pourront détecter un tel événement.

Les séquences sont stockées dans la mémoire RAM pendant une phase de programmation décrite ultérieurement et dans laquelle on entre en composant un code confidentiel sur le clavier du poste.

La figure 5 représente un organigramme général plus détaillé des opérations effectuées par le programme du microcontrôleur 12.

En 100, la sortie du détecteur de décroché 14 est scrutée. En 104 on effectue l'acquisition de la séquence de symboles ou chiffres composés sur le poste 10 et fournis au microcontrôleur par le décodeur DTMF 14. Ici deux solutions sont possibles avant de poursuivre à l'étape suivante 106. Une première solution est de poursuivre à l'étape 106 à chaque acquisition d'un nouveau chiffre ou symbole. Une deuxième solution consiste à acquérir tous les symboles ou chiffres composés avant de passer à l'étape 106. La fin de la composition d'une séquence est détectée, par exemple, par le fait que l'utilisateur marque une pose supérieure à un délai prédéterminé, ou bien par le fait que l'on détecte sur la ligne LT la tonalité indiquant la sonnerie au niveau du poste appelé.

En 106, on vérifie si la séquence correspond à un code confidentiel stocké dans la mémoire RAM. Pour différencier un code confidentiel d'un numéro normal, le code est composé, par exemple, en l'encadrant de symboles spéciaux, tels que les symboles * et #.

En 108, la séquence composée ne contient pas de code confidentiel, ou bien le code confidentiel est mauvais. On vérifie alors si la séquence composée correspond à une séquence interdite stockée dans la mémoire RAM.

Si la séquence composée n'est pas interdite, ou bien si elle correspond à un code confidentiel mauvais, on attend un raccroché en 110, c'est-à-dire que la communication téléphonique se déroule de façon classique avec les chiffres qui ont été composés, jusqu'à ce que l'utilisateur raccroche. Bien entendu, dans le cas où un code confidentiel mauvais a été composé, on n'obtient aucune communication téléphonique, puisqu'un code confidentiel ne correspond pas à un numéro de téléphone.

Par contre, si la séquence composée correspond à une séquence interdite en 108, le microcontrôleur 12 commande l'ouverture de l'interrupteur K en 112 pendant un temps suffisamment long pour être interprété comme un raccroché par le central téléphonique. L'interrupteur K est ensuite refermé en 114.

Après l'attente du raccroché en 110 ou la fermeture de l'interrupteur K en 114, le microcontrôleur se met à attendre un nouveau décroché en 100.

Si la séquence composée correspond à un code bon en 106, on vérifie en 116 si la séquence commence par un symbole spécial spécifique, par exemple le symbole #. Si ce n'est pas le cas, par exemple si la séquence commence par le symbole *, on provoque un raccroché en 118 par l'ouverture du commutateur K. L'arrivée à l'étape 118 signifie que l'utilisateur a composé un code confidentiel correct avec une combinaison spécifique de symboles spéciaux indiquant que toutes les interdictions doivent être temporairement levées.

Le commutateur K est de nouveau fermé en 120. L'utilisateur, ayant normalement encore le combiné à la main, ceci provoque de nouveau un décroché. L'utilisateur n'a plus qu'à composer le numéro souhaité, qui ne sera pas vérifié par les étapes 104 à 108. Tout numéro est ainsi autorisé, même un numéro normalement interdit, et la communication se déroule normalement jusqu'à ce qu'un raccroché soit détecté en 110.

Un code confidentiel est de préférence inséré entre deux symboles spéciaux, le symbole de début indiquant qu'il s'agit d'un code confidentiel, et le symbole de fin indiquant la fin du code confidentiel. Il en résulte que le nombre de chiffres du code peut être quelconque. On évitera de préférence des codes confidentiels à deux chiffres qui peuvent correspondre à des services de France Télécom.

Bien entendu, les séquences interdites ainsi que le code confidentiel et autres informations doivent pouvoir être programmés. L'utilisateur exprime le souhait de programmer en précédant son code confidentiel d'un symbole spécial spécifique, par exemple le symbole # dans le présent exemple (le symbole * étant utilisé pour lever les interdictions). Alors, on passe de l'étape 116 dans un mode de programmation en 122.

Dans le mode de programmation, diverses techniques peuvent être utilisées pour saisir les séquences interdites à stocker dans la mémoire RAM ainsi que diverses informations associées. Par exemple, on identifie un emplacement mémoire par un numéro à deux chiffres encadré par deux symboles spéciaux, suivi de la séquence interdite puis d'un symbole spécial pour indiquer la fin de la séquence. Le code confidentiel, afin de pouvoir le changer, est stocké à un emplacement spécifique accessible de la même manière que les emplacements contenant des séquences interdites. Bien entendu, le code confidentiel est réglé à une valeur spécifique en usine et fourni à l'utilisateur dans la notice d'emploi.

Une fois que l'utilisateur a effectué sa programmation, il raccroche le combiné, ce qui termine le mode de programmation en 110.

Dans l'organigramme de la figure 5, les séquences stockées dans la mémoire RAM ont été considérées comme des séquences interdites. Une séquence spécifique stockée interdit l'appel de tout numéro qui commence par cette séquence. Ainsi, en stockant des séquences plus ou moins longues, on définit des familles de numéros interdits. Par exemple, dans de nombreux pays, en stockant la séquence 00, on interdit l'appel de tout numéro à l'étranger. Le stockage de la séquence 36 interdit, en France, l'utilisation des services télématiques. Bien entendu, une séquence peut correspondre à un numéro entier.

Un inconvénient de ne stocker que des séquences interdites à faible nombre de chiffres est que l'on définit des grandes familles de numéros interdits qui peuvent comporter des numéros que l'on souhaite autoriser.

Pour éviter cet inconvénient, la présente invention prévoit de stocker également des séquences autorisées de manière à pouvoir définir des sous-familles de numéros autorisés à l'intérieur de familles de numéros interdits. Alors, par exemple, en stockant la séquence 36 comme interdite et la séquence 3611 comme autorisée, on interdit l'appel de tout numéro commençant par 36, sauf le 3611 (et tout autre numéro commençant par 3611).

Des séquences autorisées sont différenciées des séquences interdites par une information supplémentaire. Par exemple, chaque séquence peut être stockée avec un bit d'autorisation supplémentaire a qui indique par un "1" que la séquence est autorisée et par un "0" que la séquence est interdite. Les séquences interdites et autorisées peuvent également être différenciées en les stockant dans deux zones mémoire distinctes, l'une ne contenant que des séquences autorisées et l'autre ne contenant que des séquences interdites. On peut également utiliser une combinaison de ces deux solutions, à savoir une première zone mémoire qui ne stocke que des séquences interdites et une deuxième zone mémoire qui stocke des séquences interdites et autorisées différenciées par l'état d'un bit d'autorisation.

Lors de la programmation d'une séquence, le bit d'autorisation pourra être mis à l'un ou l'autre état selon le symbole spécial que l'on utilise pour terminer la séquence.

Pour vérifier si un numéro composé est ou non interdit (à l'étape 108), on compare chaque séquence stockée à un nombre correspondant des premiers chiffres du numéro composé. Parmi les séquences qui coïncident avec les premiers chiffres du numéro composé, c'est la plus longue qui détermine si le numéro est ou non autorisé.

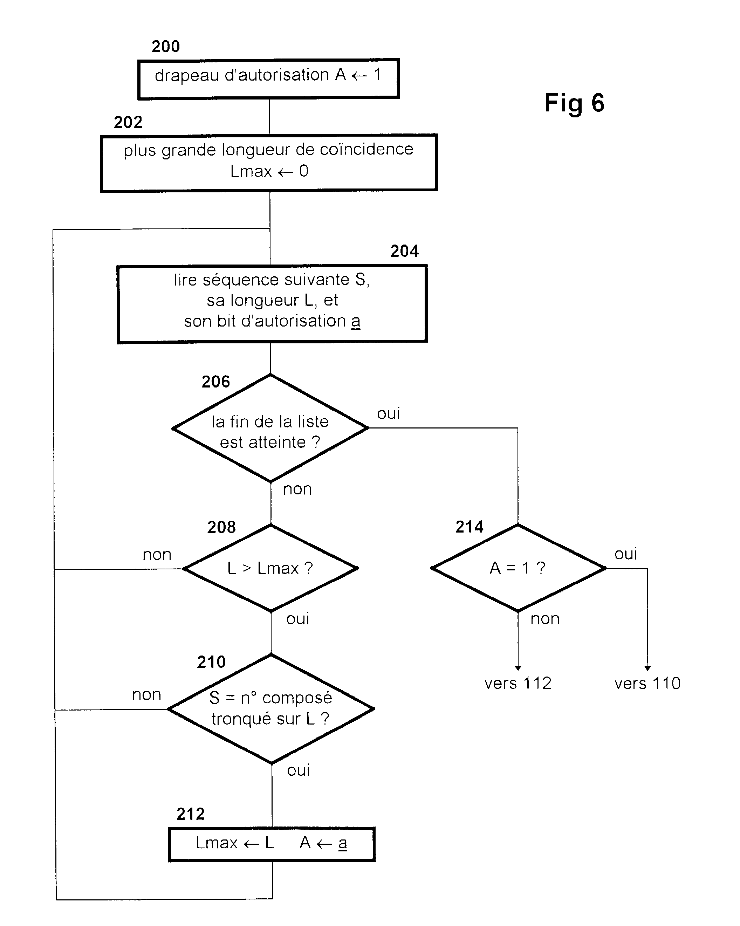

La figure 6 représente un organigramme détaillé d'un exemple de traitement mis en oeuvre par le programme du microcontrôleur 12 pour atteindre ce but. Cet organigramme correspond en fait aux opérations qui sont effectuées en 108 dans l'organigramme de la figure 5. Pour ce traitement, chaque séquence est stockée avec sa longueur dans la mémoire RAM.

En 200, le numéro composé a été acquis. Un drapeau d'autorisation générale A est mis à 1. En 202, une variable Lmax est mise à zéro. Cette variable Lmax sert à contenir la longueur de la plus grande séquence coïncidant avec les premiers chiffres du numéro composé.

En 204, on lit, dans la liste de séquences stockées, la séquence suivante S, sa longueur L, et son bit d'autorisation a. Bien entendu, la séquence lue initialement en 204 est la première de la liste.

En 206, on vérifie si la fin de la liste de séquences est atteinte.

Si la fin de la liste n'est pas atteinte, on vérifie en 108 si la longueur L de la séquence courante est strictement supérieure à la longueur Lmax. Sinon, il est inutile d'aller plus loin et on lit la séquence suivante en 204. En effet, dans ce cas, la séquence en cours d'examen ne peut être prise en compte, car on a précédemment trouvé une séquence plus longue (de longueur Lmax) concordant avec le numéro composé.

Par contre, si la longueur L de la séquence courante S est supérieure à Lmax, on compare en 210 la séquence S au numéro composé tronqué sur L chiffres, c'est-à-dire que l'on compare les L premiers chiffres du numéro composé aux L chiffres de la séquence S. S'il n'y a pas égalité, on lit la séquence suivante en 204. S'il y a égalité, on a trouvé une séquence concordante plus longue que les séquences concordantes précédemment trouvées. Ainsi, en 212, la longueur Lmax est affectée de la longueur L de la séquence courante. Par ailleurs, le drapeau d'autorisation générale A est affecté du bit d'autorisation a de la séquence courante. La séquence suivante est alors lue en 204.

Lorsque la fin de la liste de séquences est atteinte, on passe de l'étape 206 à une étape 214 où l'on vérifie l'état du drapeau d'autorisation générale A. S'il est égal à 1, c'est-à-dire si la plus longue séquence concordante trouvée est une séquence autorisée, le traitement se termine par le passage de l'étape 108 de la figure 5 à l'étape 110 où la communication téléphonique se déroule normalement avec le numéro qui a été composé.

Si le drapeau d'autorisation générale A est à 0, c'est-à-dire si la plus longue séquence concordante trouvée précédemment est une séquence interdite, le traitement se termine par le passage de l'étape 108 de la figure 5 à l'étape 112 où le commutateur K est ouvert pour simuler un raccroché.

Un dispositif de restriction d'accès du type de la figure 1 peut, selon l'invention, être complété par un circuit de numérotation incorporé dans l'ensemble de circuits 14. Le dispositif a alors plusieurs applications avantageuses.

Une première application consiste en un système de faible coût pour vérifier la programmation du dispositif. Pour cela, le fabricant ou le revendeur du dispositif peut créer un serveur vocal dont le numéro de téléphone est stocké dans la mémoire RAM. Lorsque l'utilisateur compose un code spécifique, le dispositif, par l'intermédiaire du circuit de numérotation, appelle le serveur vocal, puis lui transmet le contenu de la mémoire RAM par fréquence vocale. Le serveur vocal prononcera alors en langage naturel tous les chiffres et symboles stockés dans la mémoire RAM. Il peut même être prévu pour reconnaître les séquences autorisées et interdites et d'autres informations et les dire en tant que telles. Le numéro de téléphone du serveur vocal sera bien entendu programmable par l'utilisateur.

Cette application évite l'utilisation de dispositifs supplémentaires complexes (afficheur, accès série...) pour permettre à l'utilisateur de vérifier la programmation du dispositif.

Une autre application consiste à permettre au dispositif d'effectuer un appel automatique au décroché. Cela est particulièrement utile pour des enfants ou des personnes incapables de composer ou de retenir un numéro.

Pour cela, le microprocesseur est programmé pour attendre un intervalle de temps prédéterminé après un décroché. Si à l'intérieur de l'intervalle de temps aucun numéro n'est composé, le microprocesseur provoque la numérotation d'un numéro spécifique stocké dans la mémoire RAM. Si un numéro est composé dans l'intervalle de temps, le dispositif se comporte de la manière normale décrite plus haut.

La présente invention est susceptible de nombreuses variantes et modifications qui apparaîtront à l'homme du métier. En particulier, l'homme du métier pourra trouver d'autres organigrammes que ceux décrits pour assurer les fonctions souhaitées. Par exemple, au lieu de parcourir la liste entière de séquences mémorisées afin de trouver la séquence concordante la plus longue, on peut prévoir que, lors de la programmation des séquences à interdite ou à autoriser, le programme du microcontrôleur réorganise les séquences dans la mémoire par longueurs décroissantes. Alors, dans l'organigramme correspondant à l'étape 108 de la figure 5, il suffira de lire successivement les séquences jusqu'au moment où on trouve une séquence concordante. A ce moment, la séquence qui vient d'être trouvée est forcément la plus longue des séquences concordantes et son bit d'autorisation a détermine si le numéro composé est ou non interdit.

L'invention a été décrite en relation avec un microcontrôleur programmé, mais elle peut être mise en oeuvre de manière câblée.

## Revendications

1. Prise téléphonique (20') comprenant deux bornes (20-1, 20-2) destinées à être reliées à deux fils respectifs d'une ligne téléphonique (LT), caractérisée en ce qu'elle comprend un dispositif de restriction d'accès (8) destiné à empêcher une communication téléphonique lors de la composition d'un numéro commençant par une séquence interdite de chiffres, ledit dispositif de restriction étant connecté aux deux bornes et comportant un commutateur (K) connecté entre une première (20-2) des deux bornes et une borne supplémentaire (20-3), les deux fils de la ligne téléphonique étant connectés respectivement à la deuxième des deux bornes (20-1) et à la borne supplémentaire.

2. Prise selon la revendication 1, caractérisée en ce que le dispositif de restriction d'accès (8) comprend :
- une mémoire (RAM) librement programmable par un utilisateur pour stocker des séquences interdites de chiffres ; et
- des moyens d'analyse (12, 14) reliés à la ligne pour acquérir les chiffres composés sur le poste, les comparer aux séquences interdites stockées dans la mémoire et, en cas de coïncidence, commander l'ouverture du commutateur pour simuler un raccroché.

3. Prise selon la revendication 2, caractérisée en ce que le dispositif de restriction d'accès devient temporairement inopérant après la composition sur le poste d'un code confidentiel, ce code confidentiel étant différencié d'un numéro téléphonique par la composition avec le code d'une première combinaison de symboles spéciaux (*).

4. Prise selon la revendication 3, caractérisée en ce que la composition du code confidentiel provoque une ouverture suivie d'une fermeture du commutateur, le dispositif redevenant opérant lors d'un raccroché ultérieur.

5. Prise selon la revendication 3, caractérisée en ce qu'une séquence est programmable dans la mémoire par l'intermédiaire du clavier du poste après composition du code confidentiel avec une deuxième combinaison de symboles spéciaux (#).

6. Prise selon la revendication 5, caractérisée en ce que l'emplacement d'une séquence dans la mémoire est identifié par la composition d'un numéro d'emplacement et d'une combinaison spécifique de symboles spéciaux.

7. Prise selon l'une quelconque des revendications 2 à 6, caractérisée en ce que la mémoire (RAM) stocke en outre des séquences autorisées de chiffres, la correspondance d'une séquence avec un numéro interdit ou un numéro autorisé étant indiquée par une information supplémentaire (a) associée à chaque séquence, les moyens d'analyse (12) étant prévus pour trouver, parmi les séquences stockées, la plus longue coïncidant avec le numéro composé, et pour commander ou non l'ouverture du commutateur (K) en fonction de l'information supplémentaire de la séquence trouvée.

8. Prise selon la revendication 7, caractérisée en ce que ladite information supplémentaire associée à une séquence est un bit d'autorisation (a) stocké avec la séquence, ce bit étant fixé, lors d'une programmation, par la composition ou non d'un symbole spécial après la composition de la séquence.

9. Prise selon la revendication 7, caractérisée en ce que la mémoire (RAM) comprend une première zone prévue pour stocker des séquences interdites et une deuxième zone prévue pour stocker des séquences autorisées, ladite information supplémentaire associée à une séquence étant fournie par la zone dans laquelle est stockée la séquence.

10. Prise selon la revendication 9, caractérisée en ce que la deuxième zone est prévue pour stocker en outre des séquences interdites, ladite information supplémentaire associée à une séquence stockée dans la deuxième zone étant fournie par un bit d'autorisation (a) stocké avec la séquence.

11. Prise selon l'une quelconque des revendications 7 à 10, caractérisée en ce que les longueurs (L) des séquences sont stockées avec les séquences.

12. Prise selon la revendication 1, caractérisée en ce qu'elle comprend un capot (40) fixé par des vis à empreinte non normalisée.

13. Prise selon la revendication 2, caractérisée en ce que le dispositif de restriction comporte un circuit de numérotation pour composer un numéro spécifique puis transmettre le contenu de la mémoire par fréquence vocale.

14. Prise selon la revendication 2, caractérisée en ce que le dispositif de restriction comporte un circuit de numérotation, le microprocesseur étant programmé pour provoquer la numérotation d'un numéro mémorisé lorsque aucun numéro n'est composé pendant un intervalle de temps prédéterminé après un décroché.
